# EUROPÄISCHE PATENTSCHRIFT

(11) **EP 2 160 429 B1**
(45) Veröffentlichungstag und Bekanntmachung des Hinweises auf die Patenterteilung: **15.08.2012**
(21) Anmeldenummer: 08761151.3
(22) Anmeldetag: 18.06.2008
(51) Int. Cl.: C08G 18/48, C09D 175/16

(54) **FLEXIBLE STRAHLUNGSHÄRTBARE BESCHICHTUNGSMASSEN**
FLEXIBLE RADIATION-CURABLE COATING MASSES
MATÉRIAUX DE REVÊTEMENT FLEXIBLES DURCISSABLES PAR RAYONNEMENT

(30) Priorität: 21.06.2007 EP 07110742
(43) Veröffentlichungstag der Anmeldung: 10.03.2010
(73) Patentinhaber: BASF SE, 67056 Ludwigshafen (DE)
(72) Erfinder: SCHWALM, Reinhold, 67157 Wachenheim (DE); MENZEL, Klaus, 67069 Ludwigshafen (DE)
(86) Internationale Anmeldenummer: PCT/EP2008/057694
(87) Internationale Veröffentlichungsnummer: WO 2008/155352

(56) Entgegenhaltungen:
- WO-A-2005/035460
- DE-A- 19 739 970
- US-A- 4 135 007
- US-A1- 2003 100 627
- US-A1- 2003 149 127

## Beschreibung

Die vorliegende Erfindung betrifft neue strahlungshärtbare Beschichtungsmassen mit hoher Flexibilität.

Strahlungshärtbare Zusammensetzungen haben in der Technik eine breite Anwendung, insbesondere als hochwertige Beschichtungsmaterialien für Oberflächen erlangt. Unter strahlungshärtbaren Zusammensetzungen versteht man Zubereitungen, die ethylenisch ungesättigte Polymere oder Prepolymere enthalten, und die, gegebenenfalls nach einem physikalischen Trocknungsschritt, durch Einwirkung energiereicher Strahlung, beispielsweise durch Bestrahlung mit UV-Licht oder durch Bestrahlung mit energiereichen Elektronen (Elektronenstrahlung), ausgehärtet werden.

A. Valet beschreibt im Polymers Paint Color Journal, Band 182 (1992), Seiten 406-411 den Einsatz von UV-Absorbern und Radikalfängern in strahlungshärtbaren Beschichtungsmitteln für Außenanwendungen zur Verbesserung der Witterungsstabilität.

Die US 4,153,778 beschreibt Urethanacrylatoligomere, die ein Polytetramethylenoxiddiol einpolymerisiert enthalten und deren Verwendung als Beschichtungen, Bindemittel und Klebstoffe, die weitere Komponenten, wie z. B. ethylenisch ungesättigte Monomere, enthalten können.

Die JP-A-62054710 beschreibt eine Urethanacrylatzusammensetzung, die ein Urethanacrylat mit einer Polyalkoholgruppe in der Polymerkette und ein weiteres polymerisierbares Monomer, wie Styrol oder Methylmethacrylat, enthält.

Die JP-A-01216837 beschreibt Filmbeschichtungen mit guter Kratzfestigkeit, Stoßfestigkeit und Abriebbeständigkeit, zu deren Herstellung ein Urethanacrylatoligomer auf Basis eines Diols mit einem zahlenmittleren Molekulargewicht von 200 bis 4000 eingesetzt wird.

Die US 4,129,667 beschreibt strahlungshärtbare Beschichtungsmittel, umfassend ein Urethanacrylatoligomer und einen UV-Absorber. Die eingesetzten Urethanacrylate können dabei von Polytetrahydrofuran abgeleitete Wiederholungseinheiten aufweisen. Zusätzlich können die Beschichtungsmittel noch mit dem Urethanacrylat copolymerisierbare Monomere, wie Monoester, Diester und höhere Ester der Acrylsäure und Methacrylsäure aufweisen.

Die US 4,135,007 hat einen der US 4,129,667 vergleichbaren Offenbarungsgehalt.

Die DE-A-199 40 313 beschreibt ein Verfahren zur Herstellung von kratzfesten und witterungsstabilen Beschichtungen, bei dem man ein flüssiges, UV-härtbares Beschichtungsmittel auf der Basis von aliphatischen Urethan(meth)acrylatprepolymeren auf ein zu beschichtendes Substrat aufbringt und die noch flüssige Beschichtung anschließend unter weitgehendem Ausschluss von Sauerstoff durch UV-Strahlung aushärtet.

Die DE-A-197 39 970 beschreibt strahlungshärtbare Zusammensetzungen, die wenigstens ein aliphatisches Urethangruppen enthaltendes Prepolymer und wenigstens einen monofunktionellen Ester einer α,β-ethylenisch ungesättigten Carbonsäure mit einem monofunktionellen Alkanol, das wenigstens einen gesättigten 5- oder 6-gliedrigen Carbocyclus oder einen entsprechenden Heterocyclus mit einem oder zwei Sauerstoffatomen im Ring als Strukturelement aufweist, enthält.

J. Weikard, W. Fischer, E. Lühmann und d. Rappen beschreiben in RadTech e | 5, 2004 Technical Proceedings den Einfluß von verschiedenen polymeren Diolen auf die Elastizität von Urethanacrylaten, nämlich reine Polyether, Polyester mit kurzen Ethersegmenten, Polyester, Polyesterpolycarbonate und Polycarbonate. Die Natur dieser einzelnen Bausteine wird nicht offenbart.

WO 2005/035460 A1 beschreibt Gemische aus difunktionellen aliphatischen Urethan(meth)acrylaten auf Basis von Poly-THF und einen Heterocyclus tragenden Reaktivverdünnern.

Die dort beschriebenen Systeme zeigen zwar bereits gute Oberflächeneigenschaften, jedoch wären höhere Härte und Flexibilität der erhaltenen Bechichtungen wünschenswert.

Aufgabe der vorliegenden Erfindung war es, strahlungshärtbare Beschichtungsmassen zu entwickeln, die eine gute Härte bei gleichzeitig hoher Flexibilität aufweisen. Diese Beschichtungen sollen eine geringe Vergilbungsneigung zeigen, so daß sie besonders für Außenanwendungen geeignet sind.

Die Aufgabe wurde gelöst durch strahlungshärtbare Beschichtungsmassen, enthaltend
- wenigstens ein (cyclo)aliphatisches Urethan(meth)acrylat (A) mit zwei ethylenisch ungesättigten Doppelbindungen pro Molekül, das als Aufbaukomponente mindestens ein Polytetrahydrofurandiol enthält und mindestens eine Gruppierung

   - -[-O-R-(CO)-]ₙ-,

   in der
   - R: einen zweibindigen aliphatischen oder cycloaliphatischen Rest mit mindestens einem Kohlenstoffatom und
   - n: eine positive ganze Zahl von mindestens 2 bedeuten, und
   - -: wenigstens einen monoethylenisch ungesättigten Reaktivverdünner B, der wenigstens eine cycloaliphatische oder heterocyclische Gruppe aufweist.

Diese erfindungsgemäßen Beschichtungsmassen zeigen eine gegenüber den aus der WO 2005/035460 A1 bekannten vergleichbaren Systemen eine verbesserte Härte und Flexibilität, die sich besonders in einer erhöhten Reißdehnung widerspiegelt.

Die erfindungsgemäßen Beschichtungsmassen enthälten mindestens ein, beispielsweise 1 bis 3, bevorzugt 1 bis 2 und besonders bevorzugt genau ein (cyclo)aliphatisches Urethan(meth)acrylat (A).

Diese (cyclo)aliphatischen Urethan(meth)acrylate (A) sind aufgebaut aus
- mindestens einem Diisocyanat (a1),
- mindestens einem Polytetrahydrofurandiol (a2) und
- mindestens einer Verbindung (a3) mit genau einer gegenüber Isocyanat reaktiven Gruppe und genau einer radikalisch polymerisierbaren Gruppe.

Radikalisch polymerisierbare Gruppen im Sinne dieses Textes sind dabei Vinylether, Acrylat- und Methacrylatgruppen, bevorzugt Acrylat- und Methacrylatgruppen und besonders bevorzugt Acrylatgruppen.

Die Gruppierung -[-O-R-(CO)-]ₙ- kann dabei in der Komponente (a2) und/oder in der Komponente (a3) und/oder als gesonderte Komponente (a4) enthalten sein. Angegeben ist dabei lediglich die Wiederholungseinheit, im Urethan(meth)acrylat (A) eingebaut ist diese Gruppierung in folgender Form: -(CO)-[-O-R-(CO)-]ₙ-O-, d.h. die endständige Carbonylgruppe der Wiederholungseinheit ist mit einer weiteren Oxagruppierung und die endständige Oxagruppierung der Wiederholungseinheit ist mit einer weiteren Carbonylgruppe verbunden.

Bevorzugt ist die Gruppierung -[-O-R-(CO)-]ₙ- Bestandteil der Komponente (a2) und/oder (a3), besonders bevorzugt Bestandteil entweder der Komponente (a2) oder (a3) und ganz besonders bevorzugt Bestandteil der Komponente (a2).

Die Gruppierung -[-O-R-(CO)-]ₙ- kann ein- oder mehrmals, beispielsweise ein- bis fünffach, bevorzugt ein- bis vierfach und besonders bevorzugt ein- bis zweifach im Urethan(meth)acrylat (A) auftreten. Dabei kann natürlich für jede Gruppierung der Wert für n unterschiedlich sein.

Bei der Komponente (a1) handelt es sich um mindestens ein, beispielsweise ein bis drei, bevorzugt ein bis zwei und besonders bevorzugt genau ein (cyclo)aliphatisches Diisocyanat.

Mit dem Begriff "(cyclo)aliphatische Diisocyanate" sind dabei aliphatische und cycloaliphatische Diisocyanate zusammengefaßt.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclischen Verbindungen.

Isocyanate, die aromatische Ringsysteme aufweisen, sind erfindungsgemäß weniger bevorzugt, da diese am Tageslicht in der Regel zu einer Vergilbung der erhaltenen Beschichtungen führen.

Bevorzugte Verbindungen (a1) sind cycloaliphatische Diisocyanate.

Die mittlere NCO Funktionalität solcher Verbindung beträgt in der Regel um 2, beispielsweise von 1,8 bis 2,2, bevorzugt von 1,9 bis 2,1 und besonders bevorzugt 1,95 bis 2,05. Von 2,0 abweichende Werte können sich beispielsweise durch Oligomerenbildung der Diisocyanate oder Verlust von NCO-Gruppen beispielsweise infolge Luftfeuchtigkeit ergeben.

Der Gehalt an Isocyanatgruppen, berechnet als NCO = 42 g/mol, beträgt in der Regel von 5 bis 25 Gew%.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, und cycloaliphatische Diisocyanate wie 1,4-, 1,3- oder 1,2-Diisocyanatocyclohexan, 4,4'- oder 2,4'-Di-(isocyanatocyclohexyl)methan, 1 -Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische.

Besonders bevorzugt sind Hexamethylendiisocyanat, 1,3-Bis(isocyanatomethyl)cyclohexan, Isophorondiisocyanat und 4,4'- oder 2,4'-Di(isocyanatocyclohexyl)methan, ganz besonders bevorzugt sind Isophorondiisocyanat und 4,4'- oder 2,4'-Di(isocyanatocyclohexyl)methan, insbesondere bevorzugt ist Isophorondiisocyanat.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Für die vorliegende Erfindung können sowohl solche Isocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (USP 4 596 678), EP-A-126 300 (USP 4 596 679) und EP-A-355 443 (USP 5 087 739) beispielsweise können (cyclo)-aliphatische Diisocyanate, z.B. wie 1 ,6-Hexamethylendiisocyanat (HDI), isomere aliphatische Diisocyanate mit 6 Kohlenstoffatomen im Alkylenrest, 4,4'- oder 2,4'-Di-(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyclo)-aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Di- oder Polyisocyanate weisen in der Regel einen sehr geringen oder sogar nicht meßbaren Anteil an chlorierten Verbindungen auf, was zu günstigen Farbzahlen der Produkte führt.

In einer Ausführungsform der vorliegenden Erfindung weisen die Diisocyanate (a1) einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch Diisocyanate (a1) mit einem höheren Chlorgehalt eingesetzt werden.

Bei der Komponente (a2) handelt es sich um mindestens ein, bevorzugt genau ein Polytetrahydrofurandiol.

Bei Polytetrahydrofurandiol handelt es sich um einen dihydroxyfunktionellen Polyether mit der Wiederholungseinheit H-[-O-CH₂-CH₂-CH₂-CH₂-]ₖ-OH, worin k eine positive ganze Zahl ist, die zu dem mittleren Molgewicht des statistischen Polymerengemisches führt. Werte für k liegen zumeist zwischen 4 und 80, bevorzugt zwischen 5 und 70, besonders bevorzugt zwischen 6 und 60.

Das Polytetrahydrofurandiol (a2) weist in der Regel ein zahlenmittleres Molekulargewicht Mₙ gemessen mit Gelpermeationschromatographie gegen Polystyrolstandard im Bereich von etwa 500 bis 4000, bevorzugt 600 bis 3000, insbesondere 750 bis 2000 auf.

Geeignete Polytetrahydrofurane können beispielsweise durch kationische Polymerisation von Tetrahydrofuran in Gegenwart von sauren Katalysatoren, wie z. B. Schwefelsäure oder Fluoroschwefelsäure, hergestellt werden. Derartige Herstellungsverfahren sind dem Fachmann bekannt. Bevorzugt handelt es sich um streng lineare Polytetrahydrofurane.

Bei der Komponente (a3) handelt es sich um mindestens ein, beispielsweise ein bis drei, bevorzugt ein bis zwei und besonders bevorzugt genau eine Verbindung mit genau einer gegenüber Isocyanat reaktiven Gruppe und genau einer radikalisch polymerisierbaren Gruppe.

Gegenüber Isocyanat reaktive Gruppen können z.B. sein -OH, -SH, -NH₂ und -NHR¹, wobei R¹ Wasserstoff oder einen C₁-C₄-Alkylrest, wie z.B. Methyl, Ethyl, n-Propyl, isoPropyl, n-Butyl, iso-Butyl, sek-Butyl oder tert-Butyl, bedeutet. Gegenüber Isocyanat reaktive Gruppen können bevorzugt sein -OH, -NH₂ oder -NHR¹, besonders bevorzugt -OH oder -NH₂ und ganz besonders bevorzugt -OH.

Komponenten (a3) können z.B. Monoester von α,β-ungesättigten Carbonsäuren, wie Acrylsäure, Methacrylsäure, Crotonsäure, Itaconsäure, Fumarsäure, Maleinsäure, Acrylamidoglykolsäure, Methacrylamidoglykolsäure, oder Vinylether mit Diolen sein, die vorzugsweise 2 bis 20 C-Atome und zwei Hydroxygruppen aufweisen. Beispiele für solche Diole sind Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,2-, 1,3- oder 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, 2-Ethyl-1,3-hexandiol, 2,4-Diethyl-1,3-octandiol, 2,4-Diethyl-1,5-octandiol oder 2-Propyl-1,3-hep-tandiol sein.

Bevorzugt sind die Monoester von Acrylsäure oder Methacrylsäure mit den aufgeführten Diolen.

Besonders bevorzugt verwendet werden 2-Hydroxyethyl(meth)acrylat, 2- oder 3-Hydroxypropyl(meth)acrylat, 1,4-Butandiolmono(meth)acrylat, Neopentylglykolmono-(meth)acrylat, 1,5-Pentandiolmono(meth)acrylat, 1,6-Hexandiolmono(meth)acrylat, sowie 4-Hydroxybutylvinylether.

Ganz besonders bevorzugt sind 2-Hydroxyethylacrylat, 2-Hydroxyethylmethacrylat, 2- oder 3-Hydroxypropylacrylat und 1,4-Butandiolmonoacrylat.

Insbesondere bevorzugt sind 2-Hydroxyethylacrylat, 2-Hydroxyethylmethacrylat und 2-Hydroxypropylacrylat, speziell 2-Hydroxyethylacrylat.

Erfindungsgemäß wesentlich ist die Anwesenheit mindestens einer Gruppierung -[-O-R-(CO)-]ₙ- im Urethan(meth)acrylat (A).

Dies kann, wie oben ausgeführt, durch Einbau einer Komponente (a4) erfolgen.

Darin bedeuten
- R: einen zweibindigen aliphatischen oder cycloaliphatischen Rest mit mindestens einem Kohlenstoffatom, bevorzugt 2 bis 20, besonders bevorzugt 2 bis 10, ganz besonders bevorzugt 3 bis 6 Kohlenstoffatomen.

Aliphatische Reste R sind beispielsweise lineares oder verzweigtes Alkylen, z.B. Methylen, 1,2-Ethylen, 1,2- oder 1,3-Propylen, 1,2-, 1,3- oder 1,4-Butylen, 1,1-Dimethyl-1,2-ethylen oder 1,2-Dimethyl-1,2-ethylen, 1,5-Pentylen, 1,6-Hexylen, 1,8-Octylen, 1,10-Decylen, oder 1,12-Dodecylen. Bevorzugt sind 1,2-Ethylen, 1,2-oder 1,3-Propylen, 1,4-Butylen und 1,5-Pentylen, besonders bevorzugt ist 1,5-Pentylen.

Denkbar, wenn auch weniger bevorzugt, sind cycloaliphatische Reste, beispielsweise Cyclopropylen, Cyclopentylen, Cyclohexylen, Cyclooctylen und Cyclododecylen.

Ferner bedeutet n eine positive ganze Zahl von mindestens 2, bevorzugt 2 bis 15, besonders bevorzugt 3 bis 12 und ganz besonders bevorzugt 4 bis 10.

Bei einer solchen Komponente (a4) kann es sich bevorzugt um Polyesterdiole auf Lacton-Basis handeln, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-R-COOH, bevorzugt HO-(CH₂)_{z}-COOH ableiten, wobei z eine Zahl von 1 bis 20 ist und ein oder mehrere H-Atome einer Methyleneinheit auch durch einen C₁- bis C₄-Alkylrest substituiert sein können.

Beispiele sind ε-Caprolacton, gamma-Caprolacton, β-Propiolacton, gamma-Butyrolacton, 2-Acetyl-gamma-Butyrolacton, gamma-Valerolacton, delta-Valerolacton, Methyl-ε-caprolacton und Pivalolacton sowie deren Gemische. Geeignete Starterkomponenten sind z.B. die oben und (a3) aufgeführten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Wie oben bereits ausgeführt, kann die Gruppierung -[-O-R-(CO)-]ₙ- aber zusätzlich oder alternativ über die Komponente (a3) in das Urethan(meth)acrylat eingeführt werden.

Dies kann beispielsweise dadurch erfolgen, daß ein Polyester (a4) mit (Meth)acrylsäure verestert oder mit einem (Meth)acrylsäureester umgestert wird. Bevorzugt werden jedoch die oben angeführten Verbindungen (a3), besonders bevorzugt Hydroxyalkylverbindungen, ganz besonders bevorzugt Hydroxyalkyl(meth)acrylate, mit einem der oben aufgeführten Lactone oder der den Lactonen entsprechenden Hydroxycarbonsäure umgesetzt. So werden Verbindungen (a3) erhalten, die bereits eine Gruppierung -[-O-R-(CO)-]ₙ- enthalten.

In diesem Fall sind Verbindungen (a31) bevorzugt,

H-[-O-R-(CO)-]ₙ-O-R²-O-(CO)-CR³=CH₂,

worin
- R²: lineares oder verzweigtes Alkylen, bevorzugt zwei bis sechs Kohlenstoffatome aufweisendes Alkylen, beispielsweise 1,2-Ethylen, 1,2- oder 1,3-Propylen, 1,2-, 1,3- oder 1,4-Butylen, 1,1-Dimethyl-1,2-ethylen, 1,2-Dimethyl-1,2-ethylen, 1,5-Pentylen, 1,6-Hexylen, 1,8-Octylen, 1,10-Decylen oder 1,12-Dodecylen, bevorzugt 1,2-Ethylen, 1,2-Propylen oder 1,4-Butylen, besonders bevorzugt 1,2-Ethylen oder 1,2-Propylen, und
- R³: Wasserstoff oder Methyl
bedeuten.

Eine bevorzugte Ausführungsform der vorliegenden Erfindung stellt es jedoch dar, das Polytetrahydrofurandiol (a2) mit mindestens einer Gruppierung -[-O-R-(CO)-]ₙ- zu modifizieren.

Dazu werden die oben aufgeführten Verbindungen (a2) mit einem der oben aufgeführten Lactone oder der den Lactonen entsprechenden Hydroxycarbonsäure umgesetzt.

Dies kann beispielsweise thermisch erfolgen oder beispielsweise mit Säuren oder Lewis-Säuren, wie zinnorganischen Verbindungen, z.B. Dibutylzinndilaurat, katalysiert werden. Die Reaktionstemperaturen liegen bevorzugt zwischen 80°C und 120°C.

Man erhält auf diese Weise Gruppierungen -[-O-R-(CO)-]ₙ- aufweisende Polytetrahydrofurandiole, die beispielsweise aufgebaut sein können wie folgt:

H-[-O-R-(CO)-]ₙ-[-O-CH₂-CH₂-CH₂-CH₂-]ₖ-OH (a21)

oder

H-[-O-R-(CO)-]ₙ₁-[-O-CH₂-CH₂-CH₂-CH₂-]ₖ-O-[(CO)-R-O-]ₙ₂-H (a22)

worin n1 + n2 = n gilt.

Diese modifizierten Polytetrahydrofurandiole (a21) oder (a22) weisen in der Regel ein zahlenmittleres Molekulargewicht Mₙ im Bereich von etwa 700 bis 5000, bevorzugt 750 bis 4000, insbesondere 1000 bis 2500 auf.

Die Urethan(meth)acrylate (A) sind, bezogen auf 100 mol% NCO-Gruppen in (a1), in der Regel aufgebaut wie folgt:
(a2) 25 bis 75 mol%, bevorzugt 30 bis 70, besonders bevorzugt 40 bis 60, ganz besonders bevorzugt 45 bis 55 und insbesondere 50 mol% bezogen auf Hydroxygruppen,
(a3) 25 bis 75 mol%, bevorzugt 30 bis 70, besonders bevorzugt 40 bis 60, ganz besonders bevorzugt 45 bis 55 und insbesondere 50 mol% bezogen auf gegenüber Isocyanat reaktive Gruppen,
(a4) 0 bis 30 mol%, bevorzugt 0 bis 25, besonders bevorzugt 0 bis 15, ganz besonders bevorzugt 0 bis 10 und insbesondere 0 mol% bezogen auf Hydroxygruppen,
mit der Maßgabe, daß die Summe immer 100 mol% ergibt.

Bevorzugt weisen die Verbindungen (A) eine Doppelbindungsdichte zwischen 0,3 und 1,6 mol/kg auf.

Die Herstellung der Urethan(meth)acrylat (A) erfolgt in der Regel durch Mischen der Komponenten in beliebiger Reihenfolge, gegebenenfalls bei erhöhter Temperatur. Bevorzugt wird dabei das Diisocyanat (a1) gegebenenfalls in einem Lösungsmittel vorgelegt, und dazu das Polytetrahydrofurandiol (a2) zugegeben, bevorzugt in mehreren Schritten. Falls eine Verbindung (a4) eingebaut werden soll, so kann diese zusammen mit dem Polytetrahydrofurandiol (a2) zum Reaktionsgemisch zugegeben werden oder nach Abschluß der Reaktion von (a1) und (a2). Nachdem die gegenüber Isocyanat reaktiven Gruppen in (a2) überwiegend oder vollständig abreagiert sind, soll heißen zu mindestens 60%, bevorzugt zu mindestens 75%, besonders bevorzugt zu mindestens 85%, ganz besonders bevorzugt zu mindestens 90% und insbesondere zu mindestens 95%, wird abschließend die Verbindung (a3) zugegeben und die Reaktion vervollständigt, bis das Reaktionsgemisch im wesentlichen keine freien NCO-Gruppen mehr aufweist. Dies bedeutet, daß der NCO-Gehalt im Reaktionsgemisch unter 1 Gew%, bevorzugt unter 0,75 Gew%, besonders bevorzugt unter 0,5 Gew%, ganz besonders bevorzugt unter 0,25 Gew% und insbesondere unter 0,1 Gew% beträgt.

Es ist auch möglich, wenn auch weniger bevorzugt, sämtliche Komponenten mit gegenüber Isocyanat reaktiven Gruppen zur Verbindung (a1) hinzuzugeben.

In der Regel wird die Reaktion bei Temperaturen zwischen 5 und 100°C, bevorzugt zwischen 20 bis 90°C und besonders bevorzugt zwischen 40 und 80°C und insbesondere zwischen 60 und 80 °C durchgeführt.

Bevorzugt wird während der Herstellung des Urethan(meth)acrylats unter wasserfreien Bedingungen gearbeitet.

Wasserfrei bedeutet dabei, daß der Wassergehalt im Reaktionssystem nicht mehr als 5 Gew% beträgt, bevorzugt nicht mehr als 3 Gew% und besonders bevorzugt nicht mehr als 1 Gew%, ganz besonders bevorzugt nicht mehr als 0,75 und insbesondere nicht mehr als 0,5 Gew%.

Bevorzugt wird die Reaktion in Gegenwart mindestens eines sauerstoffhaltigen Gases durchgeführt, z.B. Luft oder Luft-Stickstoff-Gemische oder Gemische aus Sauerstoff oder einem sauerstoffhaltigen Gas mit einem unter den Reaktionsbedingungen inerten Gas, die einen Sauerstoffgehalt unter 15, bevorzugt unter 12, besonders bevorzugt unter 10, ganz besonders bevorzugt unter 8 und insbesondere unter 6 Vol% aufweisen.

Zur Stabilisierung der radikalisch polymerisierbaren Verbindungen werden vorzugsweise 0,001 bis 2 Gew.-%, insbesondere 0,005 bis 1,0 Gew.-% Polymerisationsinhibitoren der Reaktion zugesetzt. Dabei handelt es sich um die üblichen, zur Behinderung der radikalischen Polymerisation geeigneten Verbindungen, z. B. um Hydrochinone oder Hydrochinonmonoalkylether, 2,6-Di-tert.-butylphenole, wie 2,6-Di-tert.-butylkresol, Nitrosamine, Phenothiazine oder Phosphorigsäureester.

Die Reaktion kann auch in Gegenwart eines inerten Solvens durchgeführt werden, z.B. Aceton, Iso-butyl-methylketon, Toluol, Xylol, Butylacetat, Methoxypropylacetat oder Ethoxyethylacetat. Bevorzugt wird die Reaktion jedoch in Abwesenheit eines Solvens oder in Gegenwart der Verbindung (B) als Lösungsmittel durchgeführt.

Die Reaktion kann thermisch oder katalysiert erfolgen. Typische Katalysatoren für eine derartige Umsetzung sind Zink-organische Verbindungen, wie Zink-Acetylacetonat oder Zink-2-ethylcaproat, oder einer Tetraalkylammonium-Verbindung, wie N,N,N-Trimethyl-N-2-hydroxypropylammonium hydroxid oder wie N,N,N-Trimethyl-N-2-hydroxypropylammonium 2-ethylhexanoat, oder Zinn-organischen Verbindungen, wie Dibutyl-zinn dilaurat.

Be dem monoethylenisch ungesättigten Reaktivverdünner (B) kann es sich um eine Verbindung (B1) handeln, die wenigstens eine cycloaliphatische Gruppe enthält, oder um eine Verbindung (B2), die mindestens eine heterocyclische Gruppe enthält.

Verbindungen (B1) sind Ester der (Meth)acrylsäure mit Cycloalkanolen oder Bicycloalkanolen, wobei das Cycloalkanol oder Bicycloalkanol von 3 bis 20 Kohlenstoffatomen, bevorzugt 5 bis 10 Kohlenstoffatome aufweist und gegebenenfalls mit C₁- bis C₄-Alkyl substituiert sein kann.

Beispiele für Cycloalkanol und Bicycloalkanol sind Cyclopentanol, Cyclohexanol, Cyclooctanol, Cyclododecanol, 4-Methyl cyclohexanol, 4-iso Propyl cyclohexanol, 4-tert. Butyl cyclohexanol (bevorzugt cis konfiguriert), Dihydrodicyclopentadienylalkohol, Isoborneol und Norbornylalkohol. Bevorzugt ist Isoborneol, Cyclohexanol und 4-tert. Butyl cyclohexanol.

Als Komponente (B2) können grundsätzlich alle monofunktionellen Ester α,β-ethylenisch ungesättigter Carbonsäuren mit einem monofunktionellen Alkanol eingesetzt werden, das wenigstens einen gesättigten 5- oder 6-gliedrigen Heterocyclus mit einem oder zwei Sauerstoffatomen im Ring als Strukturelement aufweist. Vorzugsweise leitet sich die Komponente (B) von Acrylsäure oder Methacrylsäure ab. Beispiele für geeignete Verbindungen der Komponente (B2) umfassen Verbindungen der allgemeinen Formel (I) 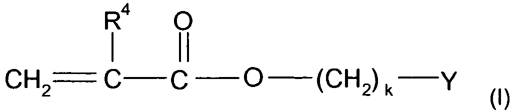 worin
- R⁴: ausgewählt ist unter H und CH₃ und insbesondere für H steht,
- k: eine Zahl von 0 bis 4 und insbesondere 0 oder 1 ist, und
- Y: für einen 5- oder 6-gliedrigen, gesättigten Heterocyclus mit einem oder zwei Sauerstoffatomen steht, wobei der Heterocyclus gegebenenfalls mit C₁-C₄-Alkyl, z. B. Methyl, Ethyl, n-Propyl, Isopropyl, n-Butyl, 2-Butyl, Isobutyl oder tert.-Butyl, substituiert ist.

Vorzugsweise leitet sich der 5- oder 6-gliedrige, gesättigte Heterocyclus von Tetrahydrofuran, Tetrahydropyran, 1,3-Dioxolan, 1,3- oder 1,4-Dioxan ab.

Besonders bevorzugt ist die Komponente (B2) ausgewählt unter Trimethylolpropanmonoformalacrylat, Glycerinmonoformalacrylat, 4-Tetrahydropyranylacrylat, Isobornylacrylat, 2-Tetrahydropyranylmethylacrylat, Tetrahydrofurfurylacrylat und Mischungen davon. Ganz besonders bevorzugt wird als Komponente (B2) Trimethylolpropanmonoformalacrylat oder Isobornylacrylat eingesetzt.

Des weiteren kann als weiterer Bestandteil (C) noch eine andere multifunktionelle polymerisationsfähige Verbindung eingesetzt werden, als die Verbindungen (A) oder (B).

Multifunktionelle, polymerisationsfähige Verbindungen sind solche mit mehr als einer, bevorzugt mit mindestens zwei radikalisch polymerisationsfähigen Gruppen.

Multifunktionelle, polymerisationsfähige Verbindungen sind bevorzugt multifunktionelle (Meth)acrylate, die mehr als 1, bevorzugt 2 - 10, besonders bevorzugt 2 - 6, ganz besonders bevorzugt 2 - 4 und insbesondere 2 - 3 (Meth)acrylatgruppen, bevorzugt Acrylatgruppen tragen.

Dies können beispielsweise Ester der (Meth)acrylsäure mit entsprechend mindestens zweiwertigen Polyalkoholen sein.

Derartige Polyalkohole sind beispielsweise mindestens zweiwertige Polyole, Polyetheroder Polyesterole oder Polyacrylatpolyole mit einer mittleren OH-Funktionalität von mindestens 2, bevorzugt 3 bis 10, geeignet.

Beispiele für multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3-oder 1,4-Cyclohexandioldiacrylat, Trimethylolpropantriacrylat, Ditrimethylolpropanpenta- oder -hexaacrylat, Pentaerythrittri- oder -tetraacrylat, Glycerindioder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt, oder von Polyesterpolyolen, Polyetherolen, Poly-1,3-Propandiol mit einer Molmasse zwischen 134 und 1178, Polyethylenglykol mit einer Molmasse zwischen 106 und 898, sowie Epoxy(meth)acrylate, Urethan(meth)acrylate oder Polycarbonat(meth)acrylate.

Weitere Beispiele sind (Meth)Acrylate von Verbindungen der Formel (IIa) bis (IId), 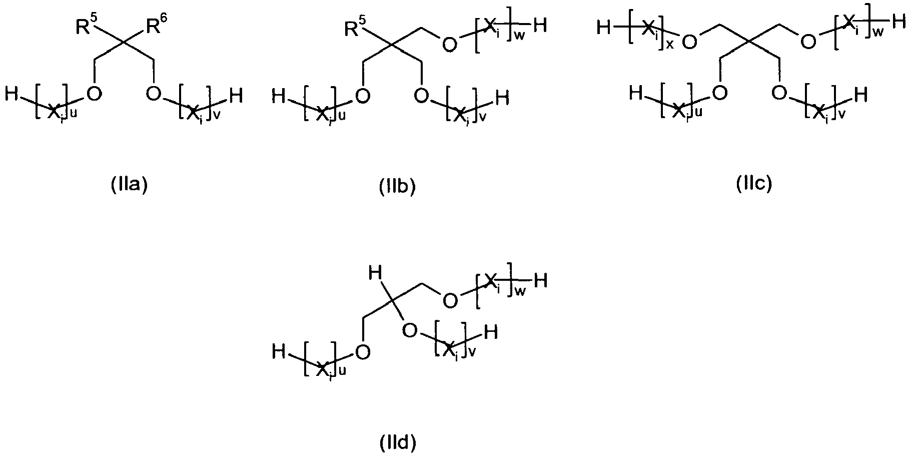 worin
R⁵ und R⁶ unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
u, v, w, x unabhängig voneinander je für eine ganze Zahl von 1 bis 10, bevorzugt 1 bis 5 und besonders bevorzugt 1 bis 3 steht und
jedes Xᵢ für i = 1 bis u, 1 bis v, 1 bis w und 1 bis x unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um (Meth)Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Bevorzugte multifunktionelle, polymerisationsfähige Verbindungen sind Ethylenglykoldiacrylat, 1,2-Propandiotdiacrylat, 1,3-Propandioldiacrylat, 1,4-Butandioldiacrylat, 1,6-Hexandioldiacrylat, Trimethylolpropantriacrylat, Pentaerythrittetraacrylat, Polyestepolyolenacrylate, Polyetherolacrylate und Triacrylat von ein- bis zwanzigfach alkoxyliertem, besonders bevorzugt ethoxyliertem Trimethylolpropan.

Ganz besonders bevorzugte multifunktionelle, polymerisationsfähige Verbindungen sind 1,4-Butandioldiacrylat, 1,6-Hexandioldiacrylat, Trimethylolpropantriacrylat, Pentaerythrittetraacrylat und Triacrylat von ein- bis zwanzigfach ethoxyliertem Trimethylolpropan.

In einer bevorzugten Ausführungsform kann es sinnvoll sein, mindestens eine Verbindung (C1) mit mindestens einer sauren Gruppe und mindestens einer radikalisch polymerisierbaren Gruppe anstelle der oder zusätzlich zur multifunktionellen, polymerisationsfähigen Verbindung (C) zuzusetzen.

Bei der sauren Gruppe kann es sich bevorzugt um eine Carboxyl-, Sulfonsäure-, Phosphonsäure- oder Phosphorsäuregruppe handeln, besonders bevorzugt um eine Carboxyl- oder Phosphonsäuregruppe.

Damit seien auch Gruppen erfaßt, ais denen sich saure Gruppen herausbilden können, beispielsweise Anhydridgruppen.

Die Verbindungen (C1) weisen beispielsweise ein bis drei, bevorzugt ein bis zwei und besonders bevorzugt genau eine saure Gruppe auf.

Die Verbindungen (C1) weisen beispielsweise ein bis drei, bevorzugt ein bis zwei und besonders bevorzugt genau eine radikalisch polymerisierbare Gruppe auf.

Beispiele für Verbindungen (C1) sind Acrylsäure, Methacrylsäure, Ethacrylsäure, α-Chloracrylsäure, Crotonsäure, Maleinsäure, Maleinsäureanhydrid, Vinylsulfonsäure, Vinylphosphonsäure, Fumarsäure, Itaconsäure, Citraconsäure, Mesaconsäure, Glutaconsäure, Aconitsäure, Allylsulfonsäure, Sulfoethylacrylat, Sulfomethacrylat, Sulfopropylacrylat, Sulfopropylmethacrylat, 2-Hydroxy-3-acryloxypropylsulfonsäure, 2-Hydroxy-3-methacryl-oxypropylsulfonsäure, Allylphosphonsäure, Styrolsulfonsäure, 2-Acrylamido-2methylpropansulfonsäure, 2-Acrylamido-2-methylpropanphosphonsäure sowie deren Amide, Hydroxyalkylester und aminogruppen- oder ammoniumgruppenhaltige Ester und Amide. Bevorzugte Verbindungen (C1) sind Acrylsäure, Methacrylsäure, Maleinsäureanhydrid, Vinylsulfonsäure und Vinylphosphonsäure, besonders bevorzugt sind Acrylsäure, Methacrylsäure und Vinylphosphonsäure.

Die Verbindungen (C1) bewirken in der Regel eine verbesserte Haftung auf den Substarten, insbesondere auf metallischen Substraten.

Die Zusammensetzung der erfindungsgemäßen Beschichtungsmassen ist in der Regel wie folgt:
(A) 20 bis 90 Gew.-%, bevorzugt 30 bis 80 Gew.-% und insbesondere 40 bis 70 Gew.-%
(B) (B) 10 bis 80 Gew.-%, vorzugsweise 20 bis 60 Gew.-% und insbesondere 30 bis 50 Gew.-%
(C) 0 bis 50 Gew.-% und bevorzugt 0 bis 40 Gew.-%
(C1) 0 bis 10 Gew%, bevorzugt 0,1 bis 6 Gew%, besonders bevorzugt bevorzugt 0,5 bis 4 Gew%,
mit der Maßgabe, daß die Summe immer 100 Gew% beträgt.

Ferner können die erfindungsgemäßen Beschichtungsmassen bezogen auf die Summe der Verbindungen (A), (B) und (C) zusätzlich 0 bis 10 Gew% mindestens eines Photoinitiators (D) enthalten.

Photoinitiatoren (D) können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen solche Photoinitiatoren, wie sie beschrieben sind in WO 2006/005491 A1, Seite 21, Zeile 18 bis Seite 22, Zeile 2 (entspricht US 2006/0009589 A1, Absatz [0150]), was hiermit durch Bezugnahme Bestandteil der vorliegenden Offenbarung sei.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Dimethoxy-2-phenylacetophenon.

Ferner können die erfindungsgemäßen Beschichtungsmassen bezogen auf die Summe der Verbindungen (A), (B) und (C) zusätzlich 0 bis 10 Gew% mindestens eines UV Stabilisators (E) enthalten.

Geeignete Stabilisatoren (E) umfassen typische UV-Absorber wie Oxanilide, Triazine und Benzotriazol (letztere erhältlich als Tinuvin® -Marken der Ciba-Spezialitätenchemie) und Benzophenone.

Diese können allein oder zusammen mit bezogen auf die Summe der Verbindungen (A), (B) und (C) zusätzlich 0 bis 5 Gew% geeigneten Radikalfängern (F), beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden.

Ferner können die erfindungsgemäßen Beschichtungsmassen bezogen auf die Summe der Verbindungen (A), (B) und (C) zusätzlich 0 bis 10 Gew% weiterer lacktypischer Additive (G) enthalten.

Als weitere lacktypische Additive (G) können beispielsweise Antioxidantien, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis-iso-butyronitril, Cyclohexylsulfonylacetylperoxid, Di-iso-propylpercarbonat, tert-Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Die erfindungsgemäßen Beschichtungsmassen eignen sich zum Beschichten von Substraten wie Holz, Papier, Textil, Leder, Vlies, Kunststoffoberflächen, Glas, Keramik, mineralischen Baustoffen, wie Zement-Form-steine und Faserzementplatten, oder Metallen oder beschichteten Metallen, bevorzugt von Kunststoffen oder Metallen, insbesondere in Form von Folien, besonders bevorzugt Metallen.

Die Beschichtungsmitteln können insbesondere in Grundierungen, Füllern, pigmentierten Decklacken und Klarlacken im Bereich Autoreparatur- oder Großfahrzeuglackierung und Flugzeugen eingesetzt werden. Besonders geeignet sind solche Beschichtungsmittel für Anwendungen, in denen eine besonders hohe Applikationssicherheit, Außenwitterungsbeständigkeit, Härte und Flexibilität gefordert werden, wie in der Autoreparatur- und Großfahrzeuglackierung.

Insbesondere werden die erfindungsgemäßen Beschichtungsmassen als oder in Automobilklar- und -decklacke(n) eingesetzt. Weitere bevorzugte Einsatzgebiete sind Can-Coating und Coil-Coating.

Unter "Coil-Coating" versteht man das kontinuierliche Beschichten von Metallbändern mit meist flüssigen Beschichtungsstoffen. Gewalzte Metallbänder werden nach der Herstellung zum Lagern und Transportieren zu Rollen (sogenannten "coils") aufgewickelt. Diese Metallbänder stellen das Ausgangsmaterial für die meisten flächigen metallischen Werkstücke dar, beispielsweise Automobilteile, Karosserieteile, Geräteverkleidungen, Fassadenverkleidungen, Deckenverkleidungen oder Fensterprofile. Dazu werden die geeigneten Metallbleche mittels geeigneter Techniken wie Stanzen, Bohren, Falzen, Profilieren und/oder Tiefziehen ausgeformt. Größere Bauteile, wie beispielsweise Automobilkarosserien werden gegebenenfalls durch Verschweißen mehrerer Einzelteile zusammengefügt.

Zur Beschichtung werden 0,2 bis 2 mm dicke und bis zu 2 m breite Metallbänder mit einer Geschwindigkeit von bis zu 200 m/min durch eine coil-coating-Anlage transportiert und dabei beschichtet. Hierzu können beispielsweise kaltgewalzte Bänder aus weichen Stählen oder Baustählen, elektrolytisch verzinktes Feinblech, feuerverzinktes Stahlband oder Bänder aus Aluminium bzw. Aluminiumlegierungen eingesetzt werden. Typische Anlagen umfassen eine Aufgabestation, einen Bandspeicher, eine Reinigungs- und Vorbehandlungszone, eine erste Lackierstation nebst Einbrennofen und folgender Kühlzone, eine zweite Lackierstation mit Ofen, Kaschierstation und Kühlung sowie einen Bandspeicher und Aufwickler.

Charakteristisch für coil-coatings sind dünne Schichten der Beschichtungsmassen, die eine Trockenschichtdicke von zumeist deutlich unter 80 µm, oftmals unter 60 µm, unter 50 µm und sogar unter 40 µm aufweisen. Zudem werden die Bleche mit hohem Durchsatz verarbeitet, was kurze Verweilzeiten erforderlich macht, also nach Auftragen der Beschichtung eine Trocknung bei erhöhter Temperatur erforderlich macht, um die Beschichtungsmasse schnell belastbar zu machen.

Die Beschichtung der Substrate mit den erfindungsgemäßen Beschichtungsmassen erfolgt nach üblichen, dem Fachmann bekannten Verfahren, wobei man eine erfindungsgemäße Beschichtungsmasse oder eine solche enthaltend Lackformulierung auf das zu beschichtende Substrat in der gewünschten Stärke aufbringt und gegebenenfalls trocknet. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen. Der Auftrag des Beschichtungsmittels kann auch elektrostatisch in Form von Pulver erfolgen (Pulverlacke). Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man das eine erfindungsgemäßen Beschichtungsmasse oder eine solche enthaltende Lackformulierung, gegebenenfalls mit weiteren lacktypischen Additiven und thermisch, chemisch oder strahlungshärtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 160°C, bevorzugt zwischen 60 und 160°C, besonders bevorzugt zwischen 100 und 160°C, thermisch behandelt.

Die Strahlungshärtung erfolgt mit energiereichem Licht, z.B. UV-Licht oder Elektronenstrahlen. Die Strahlungshärtung kann bei höheren Temperaturen erfolgen. Bevorzugt ist dabei eine Temperatur oberhalb der T_{g} des strahlungshärtbaren Bindemittels.

Strahlungshärtung heißt hier die radikalische Polymerisation von polymerisierbaren Verbindungen infolge einer elektromagnetischen und/oder korpuskularen Strahlung, bevorzugt UV-Licht im Wellenlängenbereich von λ=200 bis 700 nm und/oder Elektronenstrahlung im Bereich von 150 bis 300 keV und besonders bevorzugt mit einer Strahlungsdosis von mindestens 80, bevorzugt 80 bis 3000 mJ/cm².

Neben einer Strahlungshärtung können noch weitere Härtungsmechanismen involviert sein, beispielsweise thermische-, Feuchtigkeits-, chemische und/oder oxidative Härtung, bevorzugt thermische und Strahlungshärtung und besonders bevorzugt Strahlungshärtung allein.

Die Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren ein- oder mehrfach appliziert werden.

Die Beschichtungsstärke liegt in der Regel in einem Bereich von etwa 3 bis 1000 g/m² und vorzugsweise 10 bis 200 g/m².

Die Trocknung und Aushärtung der Beschichtungen erfolgt im allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden. Dies ist begrenzt durch die Thermostabilität des Substrats.

Weiterhin wird ein Verfahren zum Beschichten von Substraten offenbart, bei dem man die erfindungsgemäße Beschichutngsmasse oder solche enthaltende Lackformulierungen, gegebenenfalls mit thermisch härtbaren Harzen versetzt, auf das Substrat aufbringt, trocknet, und anschließend mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur.

Das Verfahren zum Beschichten von Substraten kann auch so durchgeführt werden, daß nach dem Aufbringen der erfindungsgemäßen Beschichtungsmasse oder Lackformulierungen zunächst mit Elektronenstrahlen oder UV Belichtung unter Sauerstoff oder bevorzugt unter Inertgas bestrahlt wird, um eine Vorhärtung zu erzielen, anschließend bei Temperaturen bis zu 160°C, bevorzugt zwischen 60 und 160 °C, thermisch behandelt und anschließend mit Elektronenstrahlen oder UV Belichtung unter Sauerstoff oder bevorzugt unter Inertgas endhärtet.

Gegebenenfalls kann, wenn mehrere Schichten des Beschichtungsmittels übereinander aufgetragen werden, nach jedem Beschichtungsvorgang eine Trocknung und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Trocknung und/oder thermische Behandlung kann auch zusätzlich zur oder anstelle der thermischen Behandlung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Des weiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Es stellt einen Vorteil der vorliegenden Erfindung dar, daß mit den erfindungsgemäßen Beschichtungsmassen Beschichtungen erhalten werden, die bei hoher Härte eine sehr gute Flexibilität aufweisen.

Die im Folgenden angegebenen Beispiele sollen die vorliegende Erfindung erläutern, ohne sie jedoch einzuschränken.

Die in dieser Schrift angegebenen %- und ppm-Angaben beziehen sich auf Gew.% und Gew.ppm, soweit nicht anders angegeben.

### Beispiele

### Beispiel 1:

### Herstellung eines Harzes auf Basis Polytetrahydrofuran-co-caprolacton:

300 Teile Polytetrahydrofuran-diol mit Molekulargewicht 1000 g/mol und 68,5 Teile Caprolacton wurden auf 100°C erhitzt und dann wurden 0,4 Teile Dibutyl-zinn-dilaurat zugegeben. Es wurde 6 Stunden bei 115°C reagieren lassen und dann abgekühlt. Es resultierte ein klares viskoses Produkt.

61,5 Teile dieses Produktes wurden mit 0,4 Teilen Hydrochinonmonomethylether und 1 Teil 2,6-di-tert.Butylkresol versetzt und auf 60°C aufgeheizt. Dann gab man innerhalb von 15 Minuten 21,4 Teile Isophoron-diisocyanat zu und ließ bei 80-85°C 2 Stunden reagieren, danach tropfte man innerhalb von 5 Minuten 11,2 Teile Hydroxyethylacrylat zu und ließ weitere 4 Stunden bei der angegebenen Temperatur weiterreagieren. Der NCO Wert ist danach auf 0 abgefallen. Das abgekühlte Produkt hatte eine Viskosität bei Raumtemperatur (23 °C) von 332 Pas.

### Beispiel 2:

Man verfuhr wie in Beispiel 1, jedoch wurden anstatt 68,5 Teile Caprolacton 137 Teile Caprolacton zugegeben. Das fertige Produkt hatte eine Viskosität bei Raumtemperatur von 110 Pas.

### Beispiel 3:

Man verfuhr wie in Beispiel 1, jedoch wurden anstatt 68,5 Teile Caprolacton 205,5 Teile Caprolacton zugegeben. Das fertige Produkt hatte eine Viskosität bei Raumtemperatur von 105 Pas.

### Beispiel 4:

Man verfuhr wie in Beispiel 1, jedoch wurden anstatt 11,2 Teile Hydroxyethylacrylat 33,1 Teile eines Umsetzungsprodukts von Hydroxyethylacrylat mit Caprolacton (TONE® M100, Dow Chemical) zugegeben. Das fertige Produkt hatte eine Viskosität bei Raumtemperatur von 83 Pas.

### Beispiel 5:

Man verfuhr wie in Beispiel 2, jedoch wurden anstatt 11,2 Teile Hydroxyethylacrylat 33,1 Teile eines Umsetzungsprodukts von Hydroxyethylacrylat mit Caprolactone (TONE® M100, Dow Chemical) zugegeben. Das fertige Produkt hatte eine Viskosität bei Raumtemperatur von 74 Pas.

### Beispiel 6:

Man verfuhr wie in Beispiel 3, jedoch wurden anstatt 11,2 Teile Hydroxyethylacrylat 33,1 Teile eines Umsetzungsprodukts von Hydroxyethylacrylat mit Caprolactone (TONE® M100, Dow Chemical) zugegeben. Das fertige Produkt hatte eine Viskosität bei Raumtemperatur von 82 Pas.

### Beispiel 7:

79 Teile Polytetrahydrofuran-diol mit Molekulargewicht 1000 g/mol, 54 Teile eines Umsetzungsprodukts von Caprolacton mit Hydroxyethylacrylat (TONE M100, Dow Chemical), 54 Teile Trimethylolpropanformal-monoacrylat, 0,1 Teile Hydrochinonmonomethylether und 0,02 Teile Dibutylzinndilaurat wurden in einem Rundkolben vorgelegt, auf 60°C aufgeheizt und während 15 Minuten wurden 35 Teile Isophorondiisocyanat zugetropft. Es wurde weitere 8 Stunden bei 80°C reagieren gelassen. Nachdem der NCO Wert auf 0 abgefallen ist, wurde das erhaltene Produkt über 50 µm Filter filtriert und abgefüllt. Das so erhaltene Urethanacrylat wies eine Viskosität von 10 Pas (bei 23°C) auf.

### Vergleichsbeispiel 1 (Bsp 1 der EP 1678094):

450 Teile Polytetrahydrofuran-diol mit Molekulargewicht 1000 g/mol, 105 Teile Hydroxyethylacrylat, 250 Teile Trimethylolpropanformal-monoacrylat, 0,4 Teile Hydrochinonmonomethylether und 0,1 Teile Dibutylzinndilaurat wurden in einem Rundkolben vorgelegt, auf 80°C aufgeheizt und während 30 Minuten werden 200 Teile Isophorondiisocyanat zugetropft. Es wurde weitere 5 Stunden bei 80°C reagieren gelassen. Nachdem der NCO Wert auf 0 abgefallen war, wurde das erhaltene Produkt über 50 µm Filter filtriert und abgefüllt. Das so erhaltene Urethanacrylat wies eine Viskosität von 15 Pas (bei 23°C) auf.

### Herstellung von Lacken aus den Harzen der Beispiele 1-6:

Die entsprechend der Beispiele 1-6 hergestellten Harze wurden mit je 10%, 30% bzw. 50% des Reaktivverdünners t-Butylcyclohexylacrylat abgemischt und zu je 96 Teilen des so hergestellten Lackes wurden 4 Teile des Photoinitiators 2-Hydroxy-2-methyl-1-phenyl-propan-1-on (Darocure® 1173, Ciba Spezialitätenchemie) gegeben.

Die so erhaltenen Lackformulierungen wurden mit einem 120 µm Kastenrakel auf Glasplatten appliziert und mit je 1350 mJ/cm² auf einer IST-UV Bandanlage belichtet.

Die belichteten Filme wurden dann von der Glasplatte abgezogen und einer Zug-Dehnungsprüfung unterzogen. Es resultieren die in Tabelle 1 dargestellten Reißdehnungen, gemessen mit einer Zuggeschwindigkeit von 1 mm/min.

| Beispiel | Reaktivverdünner (%) | Reißdehnung (%) |
|---|---|---|
| Beispiel 1 | 10 | 87 |
| | 30 | 114 |
| | 50 | 115 |
| Beispiel 2 | 10 | 63 |
| | 30 | 80 |
| | 50 | 133 |
| Beispiel 3 | 10 | 79 |
| | 30 | 112 |
| | 50 | 117 |
| Beispiel 4 | 10 | 66 |
| | 30 | 76 |
| | 50 | 140 |
| Beispiel 5 | 10 | 71 |
| | 30 | 100 |
| | 50 | 143 |
| Beispiel 6 | 10 | 60 |
| | 30 | 90 |
| | 50 | 141 |

### Herstellung von Lacken und Applikation:

Zu je 96 Teilen der hergestellten Urethanacrylate gab man je 4 Teile des Photoinitiators 2-Hydroxy-2-methyl-1-phenyl-propan-1-on (Darocure® 1173, Ciba Spezialitätenchemie), mischte sorgfältig für ca. 2 Stunden auf einem Rollbrett und applizierte die Lackmischung mit einem 100 µm Erichsen-Kastenrakel auf Glasplatten bzw. Bonderbleche. Die so aufgetragenen Schichten wurden dann auf einer UV Belichtungsanlage der Fa. IST-Metz mit 1350 mJ/cm² belichtet.

Die Lackfilme wiesen folgende Eigenschaften auf:

| | Pendeldämpfung (s) Erichsen-Tiefung (mm) | Reißdehnung (%) |
|---|---|---|
| Beispiel 7 | 18 > 9,5 | 89 |
| Vergleichsbsp. 1 | 9 > 9,5 | 81 |

### Meßbedingungen:

### Pendeldämpfung: (orientiert an DIN 53157)

100 µm Naßfilmdicke, belichtet mit einem Hg- Hochdruckstrahler, 120 W/cm; Objektabstand 10 cm; Bandgeschwindigkeit 2 x 10 m/min; Pendelgerät nach DIN 53157 (König); Angabe in sec.

### Erichsentiefung:(orientiert an DIN 53156)

50 µm Naßfilmdicke mit Spiralrakel; belichtet mit einem Hg- Hochdruckstrahler, 120 W/cm; Objektabstand 10 cm; Bandgeschwindigkeit 2 x 10 m/min; Erichsen-Tiefung nach DIN 53156; Angabe in mm.

## Patentansprüche

1. Strahlungshärtbare Beschichtungsmassen, enthaltend
- wenigstens ein (cyclo)aliphatisches Urethan(meth)acrylat (A) mit zwei ethylenisch ungesättigten Doppelbindungen pro Molekül, das als Aufbaukomponente mindestens ein Polytetrahydrofurandiol enthält und mindestens eine Gruppierung
-[-O-R-(CO)-]ₙ-,
in der
R einen zweibindigen aliphatischen oder cycloaliphatischen Rest mit mindestens einem Kohlenstoffatom und
n eine positive ganze Zahl von mindestens 2 bedeuten,
und
- wenigstens einen monoethylenisch ungesättigten Reaktiwerdünner (B), der wenigstens eine cycloaliphatische oder heterocyclische Gruppe aufweist.

2. Beschichtungsmasse gemäß Anspruch 1, **dadurch gekennzeichnet, daß** das Urethan(meth)acrylat (A) aufgebaut ist aus
- mindestens einem Diisocyanat (a1),
- mindestens einem Polytetrahydrofurandiol (a2) und
- mindestens einer Verbindung (a3) mit genau einer gegenüber Isocyanat reaktiven Gruppe und genau einer radikalisch polymerisierbaren Gruppe,
wobei die Gruppierung -(-O-R-(CO)-]ₙ- Bestandteil der Komponente (a2) und/oder Komponente (a3) ist.

3. Beschichtungsmasse gemäß Anspruch 2, **dadurch gekennzeichnet, daß** die Komponente (a1) ausgewählt ist aus der Gruppe bestehend aus Hexamethylendiisocyanate, 1,3-Bis(isocyanatomethyl)cyclo-hexan, Isophorondiisocyanat, und 4,4'-2,4'-Di(isocyanatocyclohexyl)methan und 2,4'-Di(isocyanatocyclohexyl)methan.

4. Beschichtungsmasse gemäß einem der Ansprüche 2 bis 3, **dadurch gekennzeichnet, daß** die Komponente (a2) ein zahlenmittleres Molekulargewicht Mₙ im Bereich von 500 bis 4000 aufweist.

5. Beschichtungsmasse gemäß einem der Ansprüche 2 bis 3, **dadurch gekennzeichnet, daß** die Komponente (a3) ausgewählt ist aus der Gruppe bestehend aus 2-Hydroxyethyl(meth)acrylat, 2- Hydroxypropyl(meth)acrylat, 3-Hydroxypropyl(meth)acrylat, 1,4-Butandiolmono(meth)acrylat, Neopentylglykolmono(meth)acrylat, 1,5-Pentandiolmono(meth)acrylat, 1,6-Hexandiolmono(meth)-acrylat und 4-Hydroxybutylvinylether.

6. Beschichtungsmasse gemäß einem der vorstehenden Ansprüche, **dadurch gekennzeichnet, daß** n eine positive ganze Zahl von bevorzugt 2 bis 15 bedeutet.

7. Beschichtungsmasse gemäß einem der Ansprüche 2 bis 6, **dadurch gekennzeichnet, daß** die Gruppierung -[-O-R-(CO)-]ₙ- durch Umsetzung eines Polytetrahydrofurandiols mit mindestens einem Lacton und/oder mindestens einer Hydroxycarbonsäure in die Komponente (a2) eingebracht wird.

8. Beschichtungsmasse gemäß einem der Ansprüche 2 bis 7, **dadurch gekennzeichnet, daß** die Komponente (a2) ausgewählt ist aus der Gruppe bestehend aus
H-[-O-R-(CO)-]ₙ-[-O-CH₂-CH₂-CH₂-CH₂-]ₖ-OH (a21)
und
H-[-O-R-(CO)-]ₙ₁-[-O-CH₂-CH₂-CH₂-CH₂-]ₖ-O-[(CO)-R-O-]ₙ₂-H (a22)
worin n1 + n2 = n gilt.

9. Beschichtungsmasse gemäß einem der Ansprüche 2 bis 8, **dadurch gekennzeichnet, daß** die Gruppierung -[-O-R-(CO)-]ₙ- durch Umsetzung eines Hydroxyalkyl(meth)acrylates mit mindestens einem Lacton und/oder mindestens einer Hydroxycarbonsäure in die Komponente (a3) eingebracht wird.

10. Beschichtungsmasse gemäß einem der Ansprüche 2 bis 9, **dadurch gekennzeichnet, daß** es sich bei der Komponente (a3) um eine Verbindung (a31) handelt,
H-[-O-R-(CO)-]ₙ-O-R²-O-(CO)-CR³=CH₂,
worin
R² lineares oder verzweigtes Alkylen, bevorzugt zwei bis sechs Kohlenstoffatome aufweisendes Alkylen, beispielsweise 1,2-Ethylen, 1,2- oder 1,3-Propylen, 1,2-, 1,3- oder 1,4-Butylen, 1,1-Dimethyl-1,2-ethylen, 1,2-Dimethyl-1,2-ethylen, 1,5-Pentylen, 1,6-Hexylen, 1,8-Octylen, 1,10-Decylen oder 1,12-Dodecylen, bevorzugt 1,2-Ethylen, 1,2-Propylen oder 1,4-Butylen, besonders bevorzugt 1,2-Ethylen oder 1,2-Propylen, und
R³ Wasserstoff oder Methyl
bedeuten.

11. Beschichtungsmasse gemäß einem der vorstehenden Ansprüche, **dadurch gekennzeichnet, daß** es sich bei dem Reaktiwerdünner (B) um einen Ester von (Meth)acrylsäure mit Cycloalkanolen oder Bicycloalkanolen handelt, wobei das Cycloalkanol oder Bicycloalkanol von 3 bis 20 Kohlenstoffatome aufweist und gegebenenfalls mit C₁- bis C₄-Alkyl substituiert sein kann.

12. Beschichtungsmasse gemäß einem der Ansprüche 2 bis 10, **dadurch gekennzeichnet, daß** es sich bei dem Reaktiwerdünner (B)um einen Ester α,β-ethylenisch ungesättigter Carbonsäuren mit einem monofunktionellen Alkanol handelt, das wenigstens einen gesättigten 5- oder 6-gliedrigen Heterocyclus mit einem oder zwei Sauerstoffatomen im Ring als Strukturelement aufweist.

13. Beschichtungsmasse gemäß einem der Ansprüche 2 bis 10, **dadurch gekennzeichnet, daß** der Reaktiwerdünner (B) ausgewählt ist aus der Gruppe bestehend aus dem (Meth)acrylsäureestern von Cyclopentanol, Cyclohexanol, Cyclo-octanol, Cyclododecanol, 4-Methyl cyclohexanol, 4-iso Propyl cyclohexanol, 4-tert. Butyl cyclohexanol, Dihydrodicyclopentadienylalkohol und Norbornylalkohol sowie Trimethylolpropanmonoformalacrylat, Glycerinmonoformalacrylat, 4-Tetrahydropyranylacrylat, 2-Tetrahydropyranylmethylacrylat und Tetrahydrofurfurylacrylat.

14. Verfahren zur Herstellung von Urethan(meth)acrylaten gemäß Anspruch 2, **dadurch gekennzeichnet, daß** man das Diisocyanat (a1) gegebenenfalls in einem Lösungsmittel vorlegt, dazu das Polytetrahydrofurandiol (a2) zugibt und man nach überwiegendem oder vollständigem Abreagieren der reaktiven Gruppen in (a2) sind die Verbindung (a3) zugibt und weiterreagieren läßt, bis das Reaktionsgemisch im wesentlichen keine freien NCO-Gruppen mehr aufweist.

15. Verwendung der Beschichtungsmassen gemäß einem der Ansprüche 1 bis 13 zum Beschichten von Holz, Papier, Textil, Leder, Vlies, Kunststoffoberflächen, Glas, Keramik, mineralischen Baustoffen, Metallen oder beschichteten Metallen.

16. Verwendung der Beschichtungsmassen gemäß einem der Ansprüche 1 bis 13 in Can-Coating und Coil-Coating.

## Claims

1. A radiation-curable coating composition comprising
- at least one (cyclo)aliphatic urethane (meth)acrylate (A) having two ethylenically unsaturated double bonds per molecule, comprising as a synthesis component at least one polytetrahydrofurandiol, and containing at least one moiety
-[-O-R-(CO)-]ₙ-,
in which
R is a divalent aliphatic or cycloaliphatic radical having at least one carbon atom and
n is a positive integer which is at least 2,
and
- at least one monoethylenically unsaturated reactive diluent (B) which contains at least one cycloaliphatic or heterocyclic group.

2. The coating composition according to claim 1, wherein the urethane (meth)acrylate (A) is synthesized from
- at least one diisocyanate (a1),
- at least one polytetrahydrofurandiol (a2)
- and at least one compound (a3) having precisely one isocyanate-reactive group and precisely one free-radically polymerizable group,
wherein the moiety -[-O-R-(CO)-]ₙ- is part of component (a2) and/or component (a3).

3. The coating composition according to claim 2, wherein component (a1) is selected from the group consisting of hexamethylene diisocyanate, 1,3-bis(isocyanatomethyl)cyclohexane, isophorone diisocyanate, and 4,4'- and 2,4'-di(isocyanatocyclohexyl)methane and 2,4'-di(isocyanatocyclohexyl)methane.

4. The coating composition according to either of claims 2 and 3, wherein component (a2) has a number-average molecular weight Mₙ in the range from 500 to 4000.

5. The coating composition according to either of claims 2 and 3, wherein component (a3) is selected from the group consisting of 2-hydroxyethyl (meth)acrylate, 2-hydroxypropyl (meth)acrylate, 3-hydroxypropyl (meth)acrylate, 1,4-butanediol mono(meth)acrylate, neopentyl glycol mono(meth)acrylate, 1,5-pentanediol mono(meth)acrylate, 1,6-hexanediol mono(meth)acrylate, and 4-hydroxybutyl vinyl ether.

6. The coating composition according to any one of the preceding claims, wherein n is a positive integer which is preferably 2 to 15.

7. The coating composition according to any one of claims 2 to 6, wherein the moiety -[-O-R-(CO)-]ₙ- is introduced into component (a2) by reaction of a polytetrahydrofurandiol with at least one lactone and/or at least one hydroxycarboxylic acid.

8. The coating composition according to any one of claim 2 to 7, wherein component (a2) is selected from the group consisting of
H-[-O-R-(CO)-]ₙ-[-O-CH₂-CH₂-CH₂-CH₂-]ₖ-OH (a21)
and
H-[-O-R-(CO)-]ₙ₁-[-O-CH₂-CH₂-CH₂-CH₂-]ₖ-O-[(CO)-R-O-]ₙ₂-H (a22)
in which n1 + n2 = n.

9. The coating composition according to any one of claims 2 to 8, wherein the moiety -[-O-R-(CO)-]ₙ- is introduced into component (a3) by reaction of a hydroxyalkyl (meth)acrylate with at least one lactone and/or at least one hydroxycarboxylic acid.

10. The coating composition according to any one of claims 2 to 9, wherein component (a3) is a compound (a31)
H-[-O-R-(CO)-]ₙ-O-R²-O-(CO)-CR³=CH₂,
in which
R² is linear or branched alkylene, preferably alkylene having two to six carbon atoms, examples being 1,2-methylene, 1,2- or 1,3-propylene, 1,2-, 1,3- or 1,4-butylene, 1,1-dimethyl-1,2-ethylene, 1,2-dimethyl-1,2-ethylene, 1,5-pentylene, 1,6-hexylene, 1,8-octylene, 1,10-decylene or 1,12-dodecylene, preferably 1,2-methylene, 1,2-propylene or 1,4-butylene, more preferably 1,2-ethylene or 1,2-propylene, and
R³ is hydrogen or methyl.

11. The coating composition according to any one of the preceding claims, wherein reactive diluent (B) is an ester of (meth)acrylic acid with cycloalkanols or bicycloalkanols, the cycloalkanol or bicycloalkanol having from 3 to 20 carbon atoms and being substitutable if appropriate by C₁ to C₄ alkyl.

12. The coating composition according to any one of claims 2 to 10, wherein reactive diluent (B) is an ester of α,β-ethylenically unsaturated carboxylic acids with a monofunctional alkanol which has as a structural element at least one saturated 5- or 6-membered heterocycle having one or two oxygen atoms in the ring.

13. The coating composition according to any one of claims 2 to 10, wherein reactive diluent (B) is selected from the group consisting of the (meth)acrylic ester of cyclopentanol, cyclohexanol, cyclooctanol, cyclododecanol, 4-methylcyclohexanol, 4-isopropylcyclohexanol, 4-tert-butylcyclohexanol, clihydrodicyclopentadienyl alcohol, and norbornyl alcohol, and also trimethylolpropane monoformal acrylate, glycerol monoformal acrylate, 4-tetrahydropyranyl acrylate, 2-tetrahydropyranylmethyl acrylate, and tetrahydrofurfuryl acrylate.

14. A process for preparing a urethane (meth)acrylate according to claim 2, which comprises initially introducing the diisocyanate (a1), optionally in a solvent, adding the polytetrahydrofurandiol (a2) to this initial charge, and, following complete or predominant consumption by reaction of the reactive groups in (a2), adding the compound (a3) and continuing reaction until the reaction mixture no longer contains substantially any free NCO groups.

15. The use of the coating composition according to any one of claims 1 to 13 for coating wood, paper, textile, leather, nonwoven, plastics surfaces, glass, ceramic, mineral building materials, or coated or uncoated metals.

16. The use of a coating composition according to any one of claims 1 to 13 in can coating or coil coating.

## Revendications

1. Matières de revêtement durcissables par irradiation, contenant
- au moins un uréthane(méth)acrylate (cyclo)-aliphatique (A) comportant deux doubles liaisons à insaturation éthylénique par molécule, qui contient comme composant structural au moins un polytétrahydrofuranediol et au moins un groupement
-[-O-R-(CO)-]ₙ-,
dans lequel
R représente un radical aliphatique ou cycloaliphatique à deux liaisons, comportant au moins un atome de carbone et
n représente un nombre entier positif valant au moins 2,
et
- au moins un diluant réactif à insaturation monoéthylénique (B), qui comporte au moins un groupe cycloaliphatique ou hétérocyclique.

2. Matière de revêtement selon la revendication 1, **caractérisée en ce que** l'uréthane(méth)acrylate (A) est constitué
- d'au moins un diisocyanate (a1),
- d'au moins un polytétrahydrofuranediol (a2) et
- d'au moins un composé (a3) comportant exactement un groupe réactif vis-à-vis d'isocyanate et exactement un groupe polymérisable par voie radicalaire,
le groupement -[-O-R-(CO)-]ₙ- faisant partie du composant (a2) et/ou du composant (a3).

3. Matière de revêtement selon la revendication 2, **caractérisée en ce que** le composant (a1) est choisi dans le groupe constitué par l'hexaméthylène-diisocyanate, le 1,3-bis(isocyanatométhyl)cyclohexane, l'isophorone-diisocyanate et le 4,4'- et 2,4'-di(isocyanatocyclohexyl)méthane et le 2,4'-di(isocyanatocyclohexyl)méthane.

4. Matière de revêtement selon la revendication 2 ou 3, **caractérisée en ce que** le composant (a2) présente une masse moléculaire moyenne en nombre Mₙ dans la plage de 500 à 4 000.

5. Matière de revêtement selon la revendication 2 ou 3, **caractérisée en ce que** le composant (a3) est choisi dans le groupe constitué par le (méth)acrylate de 2-hydroxyéthyle, le (méth)acrylate de 2-hydroxypropyle, le (méth)acrylate de 3-hydroxypropyle, le mono(méth)acrylate de 1,4-butanediol, le mono(méth)acrylate de néopentylglycol, le mono(méth)acrylate de 1,5-pentanediol, le mono(méth)acrylate de 1,6-hexanediol et l'éther 4-hydroxybutylvinylique.

6. Matière de revêtement selon l'une quelconque des revendications précédentes, **caractérisée en ce que** n représente un nombre entier positif valant de préférence 2 à 15.

7. Matière de revêtement selon l'une quelconque des revendications 2 à 6, **caractérisée en ce que** le groupement -[-O-R-(CO)-]ₙ- est introduit dans le composant (a2) par la réaction d'un polytétrahydrofuranediol avec au moins une lactone et/ou au moins un acide hydroxycarboxylique.

8. Matière de revêtement selon l'une quelconque des revendications 2 à 7, **caractérisée en ce que** le composant (a2) est choisi dans le groupe constitué par
H-[-O-R-(CO)-]ₙ-[-O-CH₂-CH₂-CH₂-CH₂-]ₖ-OH (a21)
et
H-[-O-R-(CO)-]ₙ₁-[-O-CH₂-CH₂-CH₂-CH₂-]ₖ-O-[(CO)-R-O-]ₙ₂-H (a22)
où n1 + n2 = n.

9. Matière de revêtement selon l'une quelconque des revendications 2 à 8, **caractérisée en ce que** le groupement -[-O-R-(CO)-]ₙ- est introduit dans le composant (a3) par la réaction d'un (méth)acrylate d'hydroxyalkyle avec au moins une lactone et/ou au moins un acide hydroxycarboxylique.

10. Matière de revêtement selon l'une quelconque des revendications 2 à 9, **caractérisée en ce que** le composant (a3) consiste en un composé (a31),
H-[-O-R-(CO)-]ₙ-O-R²-O-(CO)-CR³=CH₂,
dans laquelle
R² représente un groupe alkylène, de préférence un groupe alkylène ayant de deux à six atomes de carbone, linéaire ou ramifié, par exemple 1,2-éthylène, 1,2- ou 1,3-propylène, 1,2-, 1,3- ou 1,4-butylène, 1,1-diméthyl-1,2-éthylène, 1,2-diméthyl-1,2-éthylène, 1,5-pentylène, 1,6-hexylène, 1,8-octylène, 1,10-décylène ou 1,12-dodécylène, de préférence 1,2-éthylène, 1,2-propylène ou 1,4-butylène, de façon particulièrement préférée 1,2-éthylène ou 1,2-propylène, et
R³ représente un atome d'hydrogène ou le groupe méthyle.

11. Matière de revêtement selon l'une quelconque des revendications précédentes, **caractérisée en ce que** le diluant réactif (B) consiste en un ester d'acide (méthacrylique avec des cycloalcanols ou des bicycloalcanols, le cycloalcanol ou bicycloalcanol ayant de 3 à 20 atomes de carbone et pouvant éventuellement être substitué par alkyle en C₁-C₄.

12. Matière de revêtement selon l'une quelconque des revendications 2 à 10, **caractérisée en ce que** le diluant réactif (B) consiste en un ester d'acides carboxyliques à insaturation α,β-éthylénique avec un alcool monofonctionnel qui comporte comme éléments structural au moins un hétérocycle saturé à 5 ou 6 chaînons, comportant un ou deux atomes d'oxygène dans le cycle.

13. Matière de revêtement selon l'une quelconque des revendications 2 à 10, **caractérisée en ce que** le diluant réactif (B) est choisi dans le groupe constitué par les esters (méth)acryliques de cyclopentanol, cyclohexanol, cyclo-octanol, cyclododécanol, 4-méthyl-cyclohexanol, 4-isopropylcyclohexanol, 4-tert-butylcyclohexanol, d'alcool dihydrodicyclopentadiénylique et norbornéol ainsi que le monoformalacrylate de triméthylolpropane, le monoformalacrylate de glycérol, l'acrylate de 4-tétrahydropyranyle, l'acrylate de 2-tétrahydropyranylméthyle et l'acrylate de tétrahydrofurfuryle.

14. Procédé pour la préparation d'uréthane-(méth)acrylates selon la revendication 2, **caractérisé en ce que** le diisocyanate (a1) est présent éventuellement dans un solvant, auquel on ajoute le polytétrahydrofuranediol (a2) et après réaction en majeure partie ou en totalité des groupes réactifs dans (a2) on ajoute le composé (a3) et on poursuit la réaction jusqu'à ce que le mélange réactionnel ne contienne pratiquement plus de groupes NCO libres.

15. Utilisation des matières de revêtement selon l'une quelconque des revendications 1 à 13, pour le revêtement de bois, papier, textile, cuir, non-tissé, surfaces de matière plastique, céramique, matériaux de construction minéraux, métaux ou métaux revêtus.

16. Utilisation des matières de revêtement selon l'une quelconque des revendications 1 à 13 dans le Can-Coating et le Coil-Coating.
